**Europäisches Patentamt**

**European Patent Office**

**Office européen des brevets**

(11) Veröffentlichungsnummer: **0 213 274**
**A2**

(12) **EUROPÄISCHE PATENTANMELDUNG**

(21) Anmeldenummer: 86106252.9

(22) Anmeldetag: 07.05.86

(51) Int. Cl.⁴: **G11B 20/10**

(30) Priorität: 29.08.85 DE 3530794

(43) Veröffentlichungstag der Anmeldung:
**11.03.87 Patentblatt 87/11**

(84) Benannte Vertragsstaaten:
**AT DE FR GB**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Liebmann, Helmut**
**Jahnstrasse 2a**
**D-8501 Feucht(DE)**

(54) **Verfahren und Einrichtung zur digitalen Aufzeichnung und Wiedergabe von Videosignalen auf einen bzw. von einem magnetischen Aufzeichnungsträger.**

(57) Bei einem Verfahren zur digitalen Aufzeichnung und Wiedergabe von Videosignalen auf einen bzw. von einem magnetischen Aufzeichnungsträger, bei dem das analoge Signal in ein NRZ-Signal umgewandelt und die Flanken des NRZ-Signals gemäß dem NRZD-Verfahren in Form von aus kurzen positiven und negativen Impulsen bestehenden Impulsgruppen aufgezeichnet werden, wobei zwischen den Impulsgruppen Pausen auftreten, und bei dem Richtung und Zeitpunkt der Nulldurchgänge zwischen den wiedergegebenen positiven und negativen Impulsen zur Rückgewinnung des NRZ-Signals ausgewertet und aus dem NRZ-Signal das analoge Signal wiedergewonnen wird, wird vorgeschlagen, dem aufzuzeichnenden Signal in den Zeitabschnitten, in denen das NRZ-Signal keine Flanken aufweist, ein Löschsignal mit einer Frequenz zu überlagern, die mindestens dem Doppelten der höchsten Signalfrequenz entspricht. Dadurch wird der Effekt des Abspreizens des letzten Impulses einer wiedergegebenen Impulsgruppe so weit reduziert, daß eine wiedergabeseitige Taktregenerierung ohne weiteres möglich ist.

FIG. 1

# VERFAHREN UND EINRICHTUNG ZUR DIGITALEN AUFZEICHNUNG UND WIEDERGABE VON VIDEOSIGNA-LEN AUF EINEN BZW. VON EINEM MAGNETISCHEN AUFZEICHNUNGSTRÄGER

Die vorliegende Erfindung betrifft ein Verfahren zur digitalen Aufzeichnung und Wiedergabe von Videosignalen auf einen bzw. von einem magnetischen Aufzeichnungsträger mit den im Oberbegriff des Anspruchs 1 angegebenen Merkmalen.

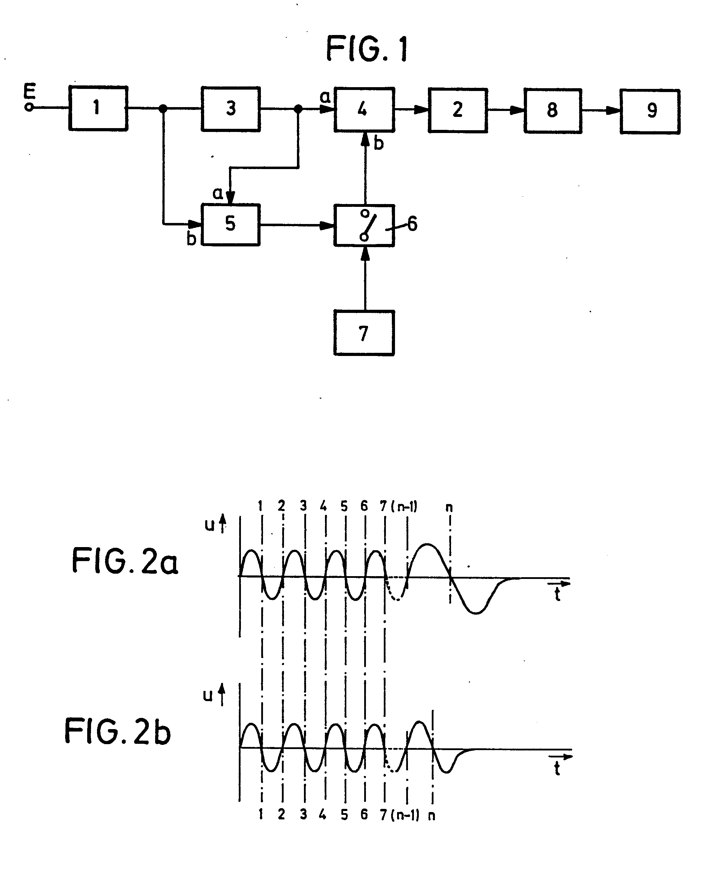

Ein solches Verfahren ist aus den deutschen Offenlegungsschriften DE-OS 31 50 417 und DE-OS 31 50 418 sowie der europäischen Patentanmeldung 0 131 823 bekannt. Dort werden ausschließlich die Wechsel der Magnetisierungsrichtung in Form von positiv oder negativ gerichteten Nadelimpulsen derart aufgezeichnet, daß der zwischen den aufgezeichneten Nadel impulsen liegende Teil des Aufzeichnungsträgers nicht magnetisiert wird. Bei der Rückgewinnung der aufgezeichneten Signale wird der Zeitpunkt des Auftretens und die Richtung der Nulldurchgänge ausgewertet. Die Vorteile dieses sogenannten NRZD-Verfahrens bestehen darin, daß die Aufzeichnung gleichstromfrei erfolgt und daß ein hoher Signal-Störabstand erreicht wird. Ferner werden beim NRZD-Verfahren nicht enzerrbare Phasenfehler, die auf eine Abspreizung des ersten und letzten Impulses einer Impulsgruppe (auch "Peakshift" genannt) zurückzuführen sind, durch eine zeitliche Verschiebung der Aufzeichnungsimpulse verringert. Allerdings bleibt weiterhin -wie sich in der Praxis gezeigt hat -eine nicht unerhebliche Abspreizung des letzten Impulses einer Impulsgruppe bestehen, was zu Schwierigkeiten bei der Taktregenerierung führt, da der zeitliche Abstand zwischen dem vorletzten und dem letzten Nulldurchgang einer wiedergegebenen Impulsgruppe wesentlich größer ist als die Abstände zwischen den übrigen Nulldurchgängen (siehe auch Fig. 2a). Die Abspreizung des ersten Impulses einer Impulsgruppe bereitet bei der Taktregenerierung keine Schwierigkeiten, da sie betragsmäßig wesentlich kleiner ist als die des letzten Impulses einer Impulsgruppe. Weiterhin ist beim bekannten NRZD-Verfahren das aufgezeichnete Signal nich selbstlöschend, so daß vor einer neuen Aufzeichnung erst die alte, bereits aufgezeichnete Information gelöscht werden muß, beispielsweise mittels eines eigenen Löschkopfes.

Der vorliegenden Erfindung liegt die Aufgabe zugrunde, ein Verfahren der im Oberbegriff des Anspruchs 1 angegebenen Art derart weiterzubilden, daß die genannten Probleme des NRZD-Verfahrens beseitigt werden.

Diese Aufgabe wird durch die im kennzeichnenden Teil des Anspruchs 1 angegebenen Merkmale gelöst. Eine Einrichtung zur Durchführung des beanspruchten Verfahrens ist im Anspruch 4 angegeben. Bevorzugte Ausführungsformen der Erfindung sind in den Ansprüchen 2 und 3 sowie 5 und 6 beschrieben.

Die Vorteile der Erfindung sind darin zu sehen, daß bei einem wiedergegebenen NRZD-Signal der Abstand zwischen den beiden letzten Nulldurchgängen jeder Impulsgruppe so weit reduziert wird, daß die Taktregenerierung unproblematisch wird. Ferner ist das aufgezeichnete Signal selbstlöschend, d.h. neue, aufzuzeichnende Signale können über die alten, bereits aufgezeichneten Signale geschrieben werden, ohne daß Signalreste der alten Information das neue, aufzuzeichnende Signal verfälschen.

Im folgenden wird ein Ausführungsbeispiel für die vorliegende Erfindung anhand der Fig. 1 und 2 näher erläutert. Es zeigt:

Fig. 1 ein Blockschaltbild zur Erläuterung der Wirkungsweise der vorliegenden Erfindung und

Fig. 2 Signalverläufe zur Veranschaulichung der Wirkungsweise der vorliegenden Erfindung.

Dem Eingang E der in Fig. 1 gezeigten Einrichtung wird das analoge Videosignal zugeführt. Von dort gelangt es in einen Wandler 1, in dem es in ein NRZ-Signal umgewandelt wird. Gemäß der vorliegenden Erfindung ist an den Wandler 1 eine Verzögerungsstufe 3 angeschlossen, in der das NRZ-Signal um eine Zeitspanne $\tau$ verzögert wird. Das Ausgangssignal der Verzögerungsstufe 3 wird einem ersten Eingang a des Pausendetektors 5 und einem ersten Eingang a eines Überlagerungsgliedes 4 zugeführt. Am zweiten Eingang b des Pausendetektors 5 liegt das unverzögerte NRZ-Ausgangssignal des Wandlers 1 an. Der Pausendetektor 5 überprüft durch Vergleich seiner beiden Eingangssignale das NRZ-Signal daraufhin, ob es gerade Pausen hat oder nicht, d. h. ob zwischen zwei Informationsimpulsen momentan ein informationsfreier Abschnitt vorliegt, dessen Dauer beispielsweise größer ist als das kürzeste Informationsintervall.

Hat das Signal gerade keine Pausen, so sperrt der Pausendetektor 5 den Schalter 6, so daß das verzögerte NRZ-Signal nach einer Umwandlung in ein NRZD-Signal (Wandler 2) zu den Aufzeichnungsköpfen 9 geleitet wird.

In den Impulspausen hingegen schaltet der Pausendetektor 5 den Schalter 6 leitend, so daß das Ausgangssignal eines Löschsignaloszillators 7 am zweiten Eingang b des Überlagerungsgliedes 4 anliegt. Die Frequenz des Ausgangssignals des Löschsignaloszillators 7 ist dabei so gewählt, daß sie mindestens dem Doppelten der höchsten vorkommenden Signalfrequenz entspricht. Dadurch wird dem aufzuzeichnenden Signal in den Zeitabschnitten, in denen das NRZ-Signal keine Flanken aufweist, ein Löschsignal zugesetzt, dessen Frequenz so groß ist, daß dieses den schmalbandigen Aufzeichnungskanal nicht passieren kann. Folglich treten im wiedergegebenen Bild keine durch das Löschsignal verursachte Störungen auf. Andererseits wird durch das aufzeichnungsseitige Einfügen des Löschsignals erreicht, daß im wiedergabeseitigen Lesesignal u(t) der Abstand des letzten Nulldurchganges vom vorletzten Nulldurchgang wesentlich verringert ist, wie es in Fig. 2b gezeigt ist.

Im Vergleich dazu ist in Fig. 2a ein Lesesignal u(t) angegeben, wie es beim herkömmlichen NRZD-Verfahren erhalten wird.

Durch die nach der vorliegenden Erfindung erhaltene wesentliche Verkürzung des Abstandes zwischen dem vorletzten und dem letzten Nulldurchgang ist eine Taktregenerierung und damit auch eine fehlerfreie Signalrückgewinnung in einer grundsätzlich bekannten Empfängerschaltung 9, die im wesentlichen den Zeitpunkt und die Richtung der Nulldurchgänge des wiedergegebenen Signals auswertet, ohne weiteres möglich.

Weiterhin ist ein nach der vorliegenden Erfindung aufgezeichnetes Signal selbstlöschend, so daß vor dem Überschreiben aufgezeichneter Signale eine Löschung bereits aufgezeichneter Information nicht notwendig ist.

In einer bevorzugten (nicht gezeichneten) Ausführungsform der Erfindung ist der Löschsignaloszillator 7 mit dem aufzuzeichnenden Signal taktverkoppelt. Dies ermöglicht ein phasenrichtiges Einfügen des Löschsignals in das aufzuzeichnende Signal.

Selbstverständlich liegt es auch im Rahmen der Erfindung, die Verbreiterung eines wiedergegebenen Einzelimpulses auf die beanspruchte Art und Weise zu reduzieren.

Ferner ist es auch ohne weiteres möglich, die Pausenerkennung und das Einfügen des Löschsignals in das aufzuzeichnende Signal erst nach der Umwandlung des NRZ-Signals in ein NRZD-Signal durchzuführen.

## Ansprüche

1. Verfahren zur digitalen Aufzeichnung und Wiedergabe von Videosignalen auf einen bzw. von einem magnetischen Aufzeichnungsträger, bei dem das analoge Signal in ein NRZ-Signal umgewandelt und die Flanken des NRZ-Signals gemäß dem NRZD-Verfahren in Form von aus kurzen positiven und negativen Impulsen bestehenden Impulsgruppen aufgezeichnet werden, wobei zwischen den Impulsgruppen Pausen auftreten, und bei dem Richtung und Zeitpunkt der Nulldurchgänge zwischen den wiedergegebenen positiven und negativen Impulsen zur Rückgewinnung des NRZ-Signals ausgewertet und aus dem NRZ-Signal das analoge Signal wiedergewonnen wird, **dadurch gekennzeichnet,** daß dem aufzuzeichnenden Signal in den Zeitabschnitten, in denen das NRZ-Signal keine Flanken aufweist, ein Löschsignal mit einer Frequenz überlagert wird, die mindestens dem Doppelten der höchsten Signalfrequenz entspricht.

2. Verfahren nach Anspruch 1, **dadurch gekennzeichnet,** daß das Löschsignal dem NRZ-Signal überlagert wird.

3. Verfahren nach Anspruch 1, **dadurch gekennzeichnet,** daß das Löschsignal dem NRZD-Signal überlagert wird.

4. Einrichtung zur Durchführung des Verfahrens nach einem oder mehreren der Ansprüche 1 bis 3, mit einem ersten Wandler zur Umwandlung des analogen Videosignals in ein NRZ-Signal, einem zweiten Wandler zur Umwandlung des NRZ-Signals in ein NRZD-Signal, mit einer Magnetkopfanordnung zur Aufzeichnung und Wiedergabe des NRZD-Signals und mit einer Anordnung zur Rückgewinnung des analogen Videosignals, **gekennzeichnet durch:**

-eine an den Ausgang des ersten oder zweiten Wandlers (1 bzw. 2) angeschlossene Verzögerungsstufe (3), die das NRZ-bzw. NRZD-Signal um eine Zeitspanne $\tau$ verzögert,

-einen Pausendetektor (5) zur Erkennung von Pausen im aufzuzeichnenden Signal,

-einen vom Pausendetektor (5) gesteuerten Schalter (6),

-einen Löschsignaloszillator (7) zur Erzeugung eines Löschsignals, dessen Frequenz mindestens dem Doppelten der höchsten Signalfrequenz entspricht, und

-ein Überlagerungsglied (4), in dem das Ausgangssignal der Verzögerungsstufe (3) und das Ausgangssignal des Schalters (6) überlagert werden.

5. Einrichtung nach Anspruch 4, **dadurch gekennzeichnet,** daß der Löschsignaloszillator (7) mit dem aufzuzeichnenden Signal taktverkoppelt ist.

6. Einrichtung nach Anspruch 4 oder 5, **dadurch gekennzeichnet,** daß der Pausendetektor (5) den Signalwert vor der Verzögerungsstufe (3) mit dem Signalwert nach der Verzögerungsstufe vergleicht.

# FIG. 1

# FIG. 2a

# FIG. 2b